# EUROPEAN PATENT APPLICATION

(11) **EP 3 026 326 A1**
(43) Date of publication of application: **01.06.2016**
(21) Application number: 15195675.2
(22) Date of filing: 20.11.2015
(51) Int. Cl.: F21S 8/06, F21V 8/00, F21Y 115/10, F21Y 103/00

(54) **LED LAMP**

(30) Priority: 28.11.2014 IT PD20140328
(71) Applicant: Eral S.R.L., 31028 Vazzola (TV) (IT)
(72) Inventor: VENDRAME, Angelo, 31028 VAZZOLA, FRAZ. TEZZE DI PIAVE TV (IT)
(74) Representative: Modiano, Micaela Nadia

(57) **Abstract**

An LED lamp (10), which comprises a supporting element (13) for at least one series of LEDs (14) and for at least one diffuser (15) constituted by a substantially plate-like and transparent or semitransparent solid body, which is juxtaposed with a first face thereof (17) against the LEDs (14) and protrudes from the supporting element (13) outwardly in order to be crossed by the light emitted by the LEDs (14) from the first face (17) to an opposite second face (18) that has a series of grooves (19) on its outer surface.

## Description

The present invention relates to an LED lamp.

The invention lies in the field of LED lighting for interiors, particularly but not exclusively for offices.

In offices it is often necessary to ensure adequate lighting for flexible work stations, for large spaces and for the use of electronic instruments such as the computer.

Lamps that can rotate or are provided with metallic or metallized reflectors are often used to direct the light in the desired directions. However, the light beam is not uniform and often causes unpleasant reflections on the monitors of computers, due to a scarcely uniform emission of the light, and it is also difficult to achieve a good distribution thereof in spacious environments.

In offices, lamps are often installed on the ceiling or are suspended and the emitted light must not dazzle those who have their face directed toward the lamp.

Furthermore, in order to light the environment adequately without leaving dark regions around the lamp, the light beam that exits from the suspended lamp must be directed not only downwardly, as often occurs with already-known lamp models, but also in the other directions, while still preventing dazzling.

Currently, therefore, the need is felt to improve the distribution of light in environments.

The aim of the present invention is to provide an LED lamp that is able to diffuse light efficiently and uniformly.

Within this aim, an object of the invention is to provide an LED lamp thanks to which it is possible to light the environment and direct the light without causing reflections on the monitors of computers and dazzling.

Another object of the invention is to provide an LED lamp that is capable of improving visual comfort with respect to currently known lamps.

This aim, as well as these and other objects that will become better apparent hereinafter, are achieved by an LED lamp, characterized in that it comprises a supporting element for at least one series of LEDs and for at least one diffuser constituted by a substantially plate-like and transparent or semitransparent solid body, which is juxtaposed with a first face thereof against said LEDs and protrudes from said supporting element outwardly in order to be crossed by the light emitted by said LEDs from said first face to an opposite second face that has a series of grooves on its external surface.

Further characteristics and advantages of the invention will become better apparent from the description of a preferred but not exclusive embodiment of the LED lamp according to the invention, illustrated by way of nonlimiting example in the accompanying drawings, wherein:
Figure 1 is a perspective view of an LED lamp according to the invention, in a possible installation configuration thereof;
Figure 2 is another exploded perspective view of a part of an LED lamp according to the invention;
Figure 3 is an enlarged-scale view of a portion of what is shown in Figure 2;
Figure 4 is an enlarged-scale view of a portion of a diffuser;
Figure 5 is a transverse sectional view of the LED lamp according to the present invention;
Figure 6 is a side view of two LED lamps installed in line;
Figure 7 is a perspective view of an element shown in Figure 6.

With reference to the figures, the LED lamp according to the present invention is generally designated by the reference numeral 10.

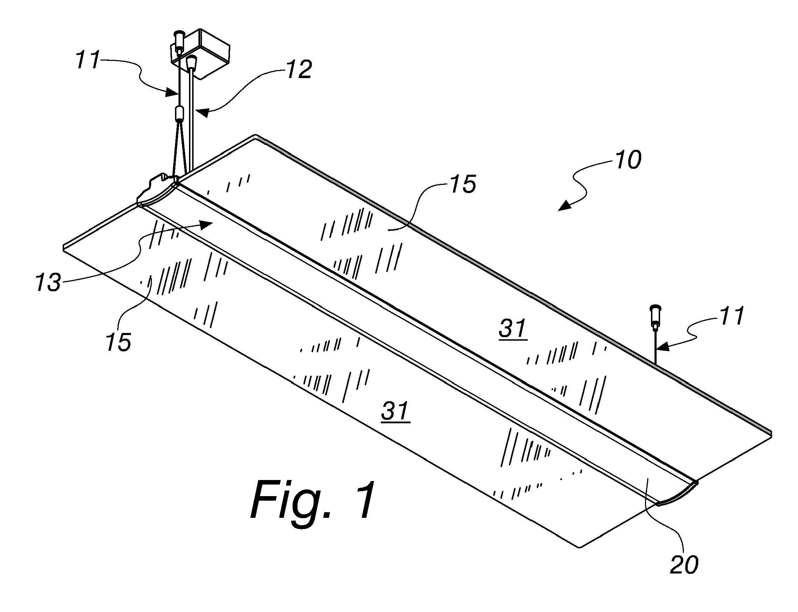

It is shown assembled in a perspective view in Figure 1, which also shows by way of example the ceiling fixing means 11 for suspended installation, which conveniently consist of steel cables and appropriate fixing hardware. As an alternative, the product can be installed on a rail.

The same figure also shows the electrical connection means 12 for the power supply of the lamp.

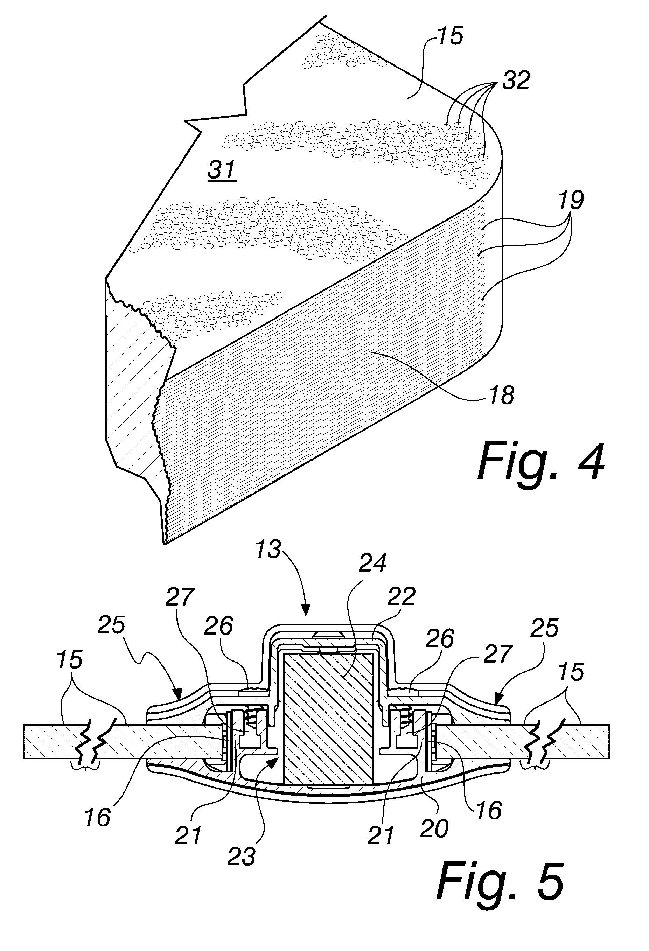

The LED lamp 10 according to the invention comprises a supporting element 13 (generally designated by this numeral in Figure 1 and in Figure 5), which is substantially longitudinally elongated, for two series of LEDs 14 and for two diffusers 15.

Each diffuser 15 is constituted by a substantially plate-like and transparent or semitransparent solid body, preferably made of poured polymethyl methacrylate, PMMA.

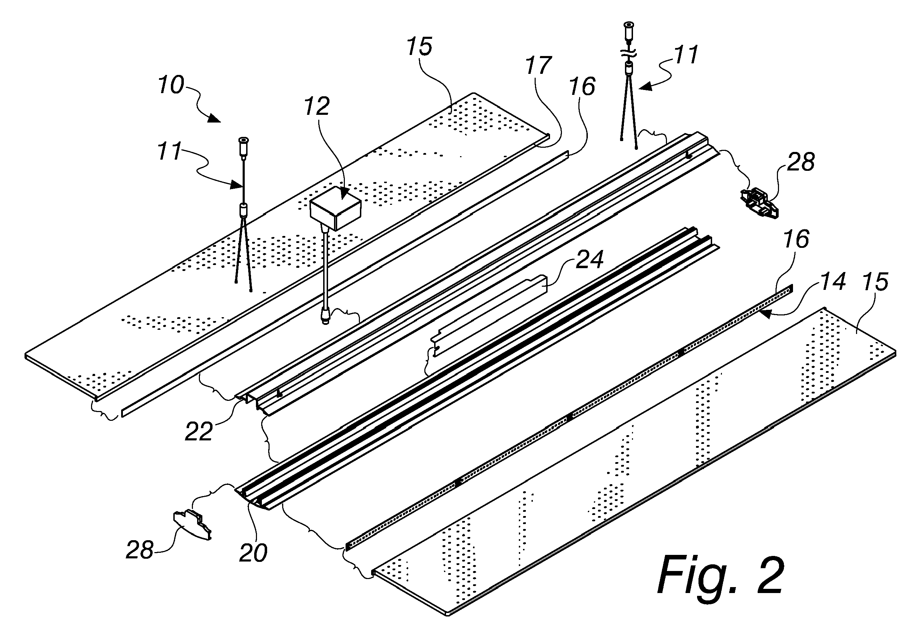

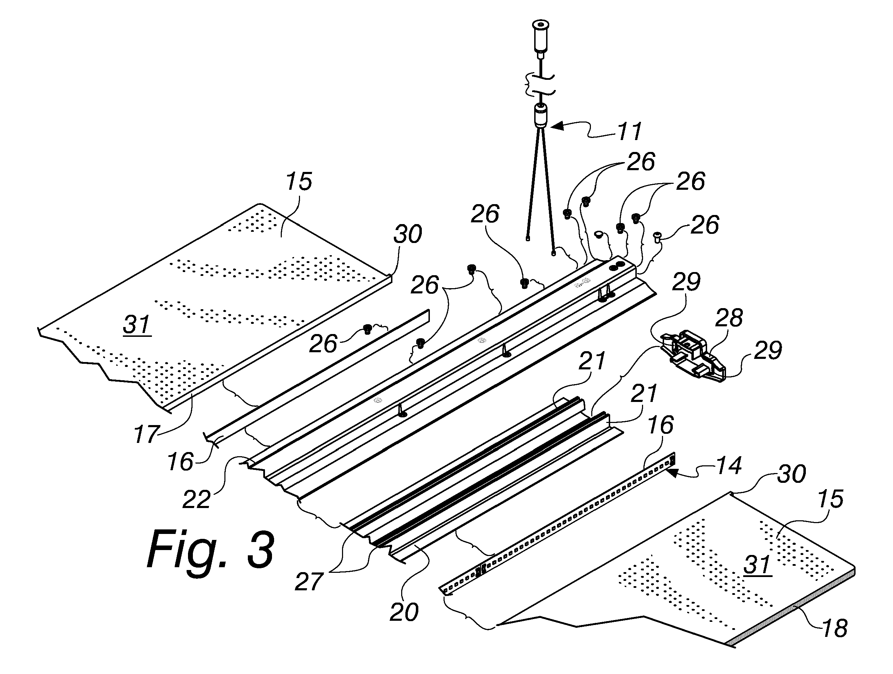

In particular, as shown in Figure 2 and Figure 3, the two series of LEDs 14 are each applied with a dissipating thermal strip 16 (in the views, it conceals one of the two series of LEDs 14) on opposite sides of the supporting element 13 and at each of them a diffuser 15 is juxtaposed with a first face thereof 17 against the LEDs 14 and protrudes from the supporting element 13 outwardly, in order to be crossed by the light emitted by the LEDs 14 from the first face 17 to an opposite second face 18.

Advantageously, the latter is provided with a series of grooves 19 on the outer surface.

The grooves 19 are substantially mutually parallel and are advantageously obtained by laser incision of the outer surface. They have been made clearly visible with the enlarged-scale view of Figure 4.

As shown, the supporting element 13, which as anticipated is longitudinally elongated, comprises a first extruded profile 20, which is arranged downward with respect to the installation position of the suspended or ceiling lamp, on the opposite sides of which the dissipating heat strips 16 which support the LEDs 14 are associated; the respective diffusers 15 extend outwardly from such sides.

In particular, the first extruded profile 20 has two opposite walls 21 that are extended along its entire length and on which the dissipating heat strips 16 are applied.

The LED lamp 10 also comprises a second extruded profile 22, which is complementary to the preceding first extruded profile 20, defining with it, substantially along the entire length of the supporting element 13, a central hollow portion 23 (shown in the sectional view of Figure 5), which is adapted to contain at least one electronic board 24 (one in the illustrated case) for supplying power to the LEDs 14, as shown by the sectional view of Figure 5.

The two extruded profiles, the first one 20 and the second one 22, are preferably made of aluminum.

As can be noticed, the electronic board 24 is arranged between the two opposite walls 21 of the first extruded profile 20, since they provide the lower part, with respect to the illustration of Figure 5, of the hollow portion 23.

Figure 5 also allows to notice that the two extruded profiles, the first one 20 and the second one 22, by overlapping also define together two clamp-like sockets 25 that are extended laterally to the hollow portion 23 on opposite sides and substantially along the entire length of the supporting element 13 in order to retain between them each diffuser 15.

The two profiles are conveniently held together by means of self-tapping screws 26, which are shown and indicated in Figure 3 and in the sectional view of Figure 5, and pass through the second extruded profile 22 to enter adapted slots 27 of the first extruded profile 20, provided conveniently on the inner part of the supporting element 13.

The supporting element 13 is provided, at each one of its ends, with a plug 28, which has, on the inner part for association with the supporting element 13, a recess 29 for accommodating a raised portion 30 of the diffuser 15. Each plug 28 therefore has two of the recesses 29 which are symmetrically opposite, for the insertion of the raised portion 30 of each diffuser 15.

The raised portions 30, by entering the respective recesses 29, constitute an association system that is additional to the self-tapping screws 26, which by associating the two profiles provide the clamp-like sockets 25.

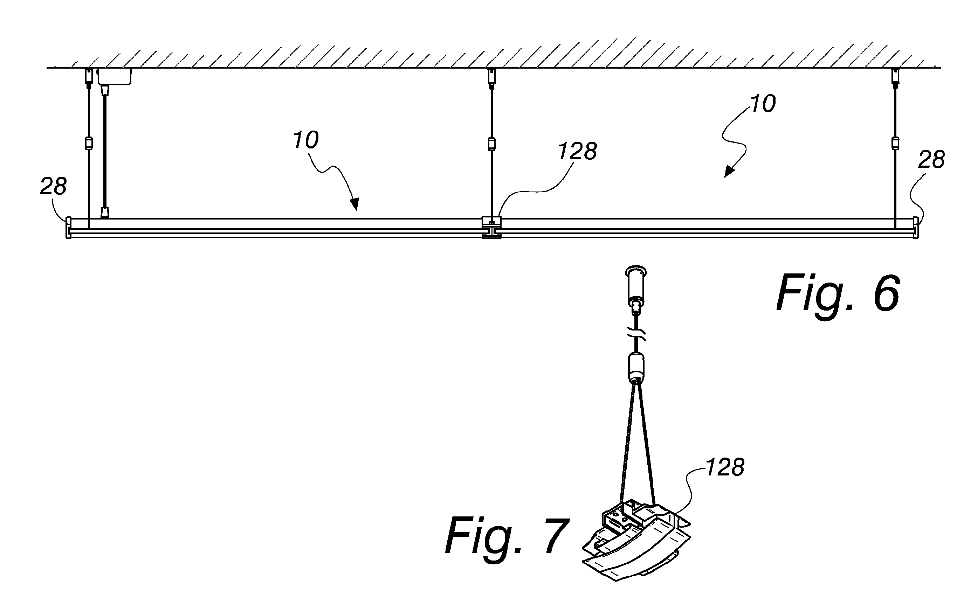

As shown in Figure 6, a plurality of LED lamps manufactured according to the LED lamp 10 according to the invention can be connected in a line.

In this case, the lamps are joined by means of a plug 128, also shown in an enlarged-scale view in the subsequent Figure 7, which is shaped complementarily on opposite sides with respect to the ends of the two supporting elements 13 and the raised portions 30 of the diffusers 15.

The ceiling fixing means 11 are fixed conveniently at the plug 128, instead of on the second extruded profile 22, arranging themselves between the pair of lamps.

Furthermore, according to this configuration, only one LED lamp 10, the main one, is provided with the electric means 12 for electrical connection to the electrical grid which are shown and indicated also in the first figure, whereas they are not present in the other LED lamps 10, which are secondary and are connected thereto by way of quick coupling connectors, not shown for the sake of simplicity and hidden, together with the electrical cables, within the hollow portion 23 of the supporting element 13.

It is possible to connect in series a plurality of LED lamps provided with the described structure, so long as one of them is provided with the electrical connection means 12 and for this reason is identified above as main lamp; the other secondary LED lamps 10 can be connected thereto on opposite sides or two or more of them can be installed in succession to the main one.

Figures 2, 3 and 4 allow to notice that each diffuser 15 is provided with circular incisions 32, which are obtained by laser machining, and are spread on one of its larger faces 31, the uppermost one with respect to the suspended installation position, according to which the platelike diffusers 15 are arranged substantially on a horizontal plane. The circular incisions 32 are clearly visible and are indicated in the enlarged-scale view of Figure 4.

Operation of the LED lamp according to the invention is as follows.

When the lamp is on, the light emitted by each series of LEDs 14 propagates within the body of the respective diffuser 15, from the first face 17 to the second face 18, where it is advantageously guided again by the grooves 19 within the diffuser 15 and accordingly in output through the larger faces 31, then toward the floor and the ceiling, in suspended installation.

The grooves 19 on the outer surface of the second face 18, moreover, eliminate the stray light that causes smudges of light, improving visual comfort, and reduce dazzling, particularly in the regions that surround the second face 18.

The particular surface incision of the diffusers 15, in combination with the grooves 19, ensures uniform and efficient emission of the light both toward the floor and toward the ceiling, in order to minimize the dark areas that are created around the supporting element 13.

These particularities in fact allowed to diffuse the light with relatively very wide emission angles at the two larger faces 31.

In this manner the light is directed uniformly, without causing unpleasant dazzling and reflections on monitors.

Furthermore, since the diffusers 15 are made of poured polymethyl methacrylate, when the lamp is off they are almost entirely transparent, whereas when the lamp is on the light diffuses therein more uniformly than would occur if they were manufactured by extrusion from the same material.

This characteristic improves the aesthetic impact of the product and contributes to render uniform the emission of the light.

A plurality of LED lamps 10 can be installed in line, in the manner described and in the exemplifying manner shown in Figure 6, creating continuous lines of lamps in order to illuminate the most spacious environments.

It should be noted that the grooves 19 and the circular laser incisions 32 are indelible and therefore cannot be damaged or easily eliminated during operations for cleaning and maintenance of the product, as can instead occur with the application of adhesive elements or with screenprinting or coatings.

It should also be noted that the plugs 28 and 128, which are respectively end plugs or connecting plugs of the lamps 10, entirely incorporate the ends of the supporting element 13 and cover the diffusers 15 only to a minimal extent.

In practice it has been found that the invention achieves the intended aim and objects, by providing an LED lamp that is capable of diffusing the light efficiently and uniformly in the environment to be illuminated and to improve the comfort level for the user with respect to currently known lamps.

The LED lamp 10 according to the invention, by keeping the light sources, i.e., the LEDs 14, concealed, prevents the formation of reflections on the monitors in any inclination they might be arranged with respect to the lamp.

The invention thus conceived is susceptible of numerous modifications and variations, all of which are within the scope of the appended claims; all the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. PD2014A000328 (102014902313237) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An LED lamp (10), **characterized in that** it comprises a supporting element (13) for at least one series of LEDs (14) and for at least one diffuser (15) constituted by a substantially plate-like and transparent or semitransparent solid body, which is juxtaposed with a first face thereof (17) against said LEDs (14) and protrudes from said supporting element (13) outwardly in order to be crossed by the light emitted by said LEDs (14) from said first face (17) to an opposite second face (18) that has a series of grooves (19) on its outer surface.

2. The LED lamp according to claim 1, **characterized in that** said grooves (19) are provided by incision of the surface of said opposite second face (18).

3. The LED lamp according to claim 1, **characterized in that** said grooves (19) are substantially mutually parallel.

4. The LED lamp according to claim 1, **characterized in that** said supporting element (13) comprises a first extruded profile (20) on at least one side of which at least one series of said LEDs (14) is associated and from which said diffuser (15) protrudes.

5. The LED lamp according to claim 4, **characterized in that** said supporting element (13) comprises a second extruded profile (22) that is complementary to said first extruded profile (20), defining with it, substantially along the entire length of said supporting element (13), a hollow portion (23) that is adapted to contain at least one electronic board (24) for supplying power to said LEDs (14) and at least one clamp-like socket (25) that is extended laterally to said hollow portion (23) in order to retain said diffuser element (15).

6. The LED lamp according to claim 5, **characterized in that** said supporting element (13) is provided with a plug (28, 128) at each one of its ends, which has, on the inner part for association with said supporting element (13), a recess (29) for accommodating a raised portion (30) of said diffuser (15).

7. The LED lamp according to claim 1, **characterized in that** said diffuser (15), which is substantially plate-like, has on at least one of its two larger faces (31) diffuse circular incisions (32).

8. The LED lamp according to claim 1, **characterized in that** it comprises at least one series of said LEDs (14) on each one of opposite sides of said supporting element (13), one diffuser (15) being juxtaposed so as to correspond to each one of said series.
